# EUROPÄISCHE PATENTANMELDUNG

(11) **EP 2 410 425 A1**
(43) Veröffentlichungstag der Anmeldung: **25.01.2012**
(21) Anmeldenummer: 11002392.6
(22) Anmeldetag: 23.03.2011
(51) Int. Cl.: G06F 9/45, G06F 9/44

(54) **Austauschverfahren für ein Steuergerät in einem Bordnetz eines Fahrzeuges**

(30) Priorität: 24.07.2010 DE 102010032136
(71) Anmelder: MAN Truck & Bus AG, 80995 München (DE)
(72) Erfinder: Schäfer, Herbert, 85221 Dachau (DE); Witte, Marc, 85229 Markt Indersdorf (DE)

(57) **Zusammenfassung**

Die Erfindung betrifft ein Austauschverfahren für ein Steuergerät (1), insbesondere für ein defektes und/oder veraltetes Steuergerät, in einem Bordnetz eines Fahrzeuges, bei welchem Austauschverfahren das auszutauschende Steuergerät (1) durch ein funktionsfähiges und/oder neues Steuergerät (3) ersetzt wird, wobei das auszutauschende Steuergerät (1) und das neue Steuergerät (3) durch inkompatible Betriebssoftware betrieben werden, umfassend Folgendes:
- Exportieren zumindest einer Softwarekomponente (CC) aus einer Softwareentwicklungsumgebung (5) der Betriebssoftware des auszutauschenden Steuergeräts (1) mittels einer Datenverarbeitungsvorrichtung (7),
- Umsetzen der zumindest einen Softwarekomponente (CC) in einen in eine Softwareentwicklungsumgebung (11) der Betriebssoftware des funktionsfähigen und/oder neuen Steuergeräts (3) importierbaren Code (ST) mittels der Datenverarbeitungsvorrichtung (7),
- Importieren des Codes (CC) in die Softwareentwicklungsumgebung (11) der Betriebssoftware des funktionsfähigen und/oder neuen Steuergeräts (3) mittels der Datenverarbeitungsvorrichtung (7),
- Erzeugen der Betriebssoftware für das funktionsfähige und/oder neue Steuergerät (3) auf Basis des importierten Codes (CC) mittels der Datenverarbeitungsvorrichtung (7).

## Beschreibung

Die Erfindung betrifft ein Austauschverfahren für ein Steuergerät eines Fahrzeuges nach dem Anspruch 1.

Die Bordnetze moderner Kraftfahrzeuge weisen eine Vielzahl von Steuergeräten auf, welche üblicher Weise über einen CAN-Bus miteinander in Verbindung stehen. Insbesondere im Bereich der Nutzfahrzeuge erfolgt die Signal- und Nachrichtenübertragung oftmals über ein sogenanntes Multiplexsystem. Bei einem Multiplexsystem werden Signale zusammengefasst und simultan über ein Medium übertragen. Auf diese Weise können die Kabelbäume der Nutzfahrzeuge erheblich reduziert werden. Das Multiplexsystem kann als ein Master-Slave-System ausgebildet sein, welches über den CAN-Bus kommuniziert. Ein zentrales Steuergerät (Bordnetzrechner) steuert dabei angekoppelte Multiplexknoten, z. B. Input/Output-Knoten, Displaysysteme etc., an.

Ist das zentrale Steuergerät defekt bzw. veraltet, so muss dieses durch ein neues Steuergerät ersetzt werden. Mit einem neuen Steuergerät ist hier beispielsweise ein funktionsfähiges Steuergerät gemeint, welches die Funktion des defekten Steuergeräts übernehmen kann. Die Originalgerätehersteller sind zudem für einen gewissen Zeitraum zur Ersatzteilleistung verpflichtet. Diese Situation führt in der Praxis bei einer Austauschnotwendigkeit von zentralen Steuergeräten regelmäßig zu Problemen. So ist die Betriebssoftware von alten Bordnetzrechnern oftmals nicht kompatibel, d.h. inkompatibel mit der von Bordnetzrechnern einer neuen Generation. Ein Austausch des Bordnetzrechners ist somit ohne erheblichen Arbeits- und Kostenaufwand nicht mehr möglich.

Aufgabe der Erfindung ist es, ein Verfahren bereitzustellen, mit weichem ein Steuergerät, insbesondere ein defektes bzw. veraltetes Steuergerät, im Bordnetz eines Fahrzeuges durch ein funktionsfähiges und/oder neues Steuergerät trotz nicht kompatibler (inkompatibler) Betriebssoftware auf einfache Weise schnell und funktionssicher ausgetauscht werden kann.

Die Aufgabe wird durch die Merkmale des Patentanspruches 1 gelöst. Vorteilhafte Weiterbildungen der Erfindung sind in den Unteransprüchen offenbart.

Gemäß dem Patentanspruch 1 der vorliegenden Erfindung umfasst ein Austauschverfahren für ein Steuergerät, insbesondere für ein defektes und/oder veraltetes Steuergerät, in einem Bordnetz eines Fahrzeuges, bei welchem Austauschverfahren das auszutauschende Steuergerät durch ein funktionsfähiges und/oder neues Steuergerät ersetzt wird, wobei das auszutauschende Steuergerät und das funktionsfähige und/oder neue Steuergerät durch inkompatible (zueinander nicht kompatible) Betriebssoftware betrieben werden, Folgendes:
- Exportieren zumindest einer Softwarekomponente aus einer Softwareentwicklungsumgebung der Betriebssoftware des auszutauschenden Steuergeräts mittels einer Datenverarbeitungsvorrichtung,
- Umsetzen der zumindest einen Softwarekomponente in einen in eine Softwareentwicklungsumgebung der Betriebssoftware des neuen Steuergeräts importierbaren Code mittels der Datenverarbeitungsvorrichtung,
- Importieren des Codes in die Softwareentwicklungsumgebung der Betriebssoftware des funktionsfähigen und/oder neuen Steuergeräts mittels der Datenverarbeitungsvorrichtung,
- Erzeugen der Betriebssoftware für das funktionsfähige und/oder neue Steuergerät auf Basis des importierten Codes mittels der Datenverarbeitungsvorrichtung.

Auf diese Weise können defekte bzw. alte Steuergeräte durch funktionsfähige und/oder neue Steuergeräte einer neuen Generation trotz Softwareinkompatibilität ausgetauscht werden. Eine Ersatzteilleistung für die Steuergeräte kann somit ohne großen Aufwand gewährleistet werden.

In einer konkreten Ausführung kann das auszutauschende Steuergerät ein zentrales Steuergerät, insbesondere einen Bordnetzrechner, eines Fahrzeuges, insbesondere eines Kraft- oder Nutzfahrzeuges, umfassen. Gerade beim Austausch von Bordnetzrechnern treten Probleme hinsichtlich der Softwarekompatibilität auf, welche mit dem beschriebenen Austauschverfahren behoben werden können.

Bevorzugt kann das auszutauschende Steuergerät in einem Multiplexsystem, insbesondere einem Master-Slave-System, geschaltet sein. Dabei kann das auszutauschende Steuergerät als Master geschaltet sein und zumindest einen Multiplexknoten ansteuern. Derartige Multiplexsysteme werden gerade in moderneren Nutzfahrzeugen eingesetzt. Die Betriebssoftware derartiger Steuergeräte ist relativ komplex aufgebaut, wodurch besonders bei diesen Geräten die Anwendung des beschriebenen Austauschverfahrens vorteilhaft ist.

Besonders bevorzugt kann das auszutauschende Steuergerät in einem CAN-Bus-System geschaltet sein. Bei CAN-Bus-Systemen wird zur Vernetzung der Steuergeräte eine komplexe Betriebssoftware benötigt. Daher ist das beschriebene Verfahren besonders für einen Austausch solcher Steuergeräte vorteilhaft.

In einer konkreten Ausführungsform kann die zumindest eine Softwarekomponente aus der Softwareentwicklungsumgebung der Betriebssoftware des auszutauschenden Steuergeräts als C-Code mittels der Datenverarbeitungsvorrichtung exportiert werden. Im Vergleich zur Interpretation anderer Codearten ist die Interpretation des C-Codes verhältnismäßig einfach. Anhand des C-Codes kann somit auch die Software alter Steuergeräte interpretiert werden.

Bevorzugt kann die zumindest eine Softwarekomponente aus der Softwareentwicklungsumgebung der Betriebssoftware des auszutauschenden Steuergeräts zumindest ein Funktionsblockdiagramm und/oder zumindest eine Ablaufsteuerung umfassen.

Besonders bevorzugt kann der importierbare Code durch Kompilierung mittels eines Cross-Compilers der Datenverarbeitungsvorrichtung erzeugt werden. Durch den Cross-Compiler können Kompilate für das funktionsfähige und/oder neue Steuergerät erzeugen werden, obwohl dessen Betriebssoftware inkompatibel zur Betriebssoftware des auszutauschenden Steuergeräts ist. Somit lassen sich Softwarekomponenten aus der Softwareentwicklungsumgebung der Betriebssoftware des auszutauschenden Steuergeräts für das funktionsfähige und/oder neue Steuergerät verwenden.

Vorteilhaft kann der importierbare Code durch Kompilierung des C-Codes in einen strukturierten Text (structured text) erzeugt werden. Strukturierter Text lässt sich vergleichsweise einfach in die Softwareentwicklungsumgebung des funktionsfähigen und/oder neuen Steuergerätes importieren.

Insbesondere kann die Kompilierung des C-Codes in strukturierten Text auf Basis zumindest einer XML-Datei als maschinenlesbare Referenz erfolgen. Ein Beschreibungsparser kann dabei die zumindest eine XML-Datei einlesen, welche als Referenz für die Kompilierung des C-Codes in strukturierten Text dient. Des Weiteren kann ein Basis-Parser die Struktur des C-Codes analysieren und ein Lex-Parser für die tatsächliche Umsetzung des C-Codes in strukturierten Text zuständig sein.

Besonders bevorzugt kann die Betriebssoftware für das funktionsfähige und/oder neue Steuergerät als Flash-Datei mittels der Datenverarbeitungsvorrichtung erzeugt werden. Flash-Dateien haben vorteilhaft ein relativ kleines Datenvolumen.

Das oben beschriebene Verfahren kann sowohl manuell als vollautomatisch durchgeführt werden.

Nachfolgend ist ein Ausführungsbeispiel der Erfindung anhand der beigefügten Figur beschrieben. Das beschriebene Ausführungsbeispiel ist rein beispielhaft und in keinster Weise beschränkend zu verstehen.

Es zeigt:

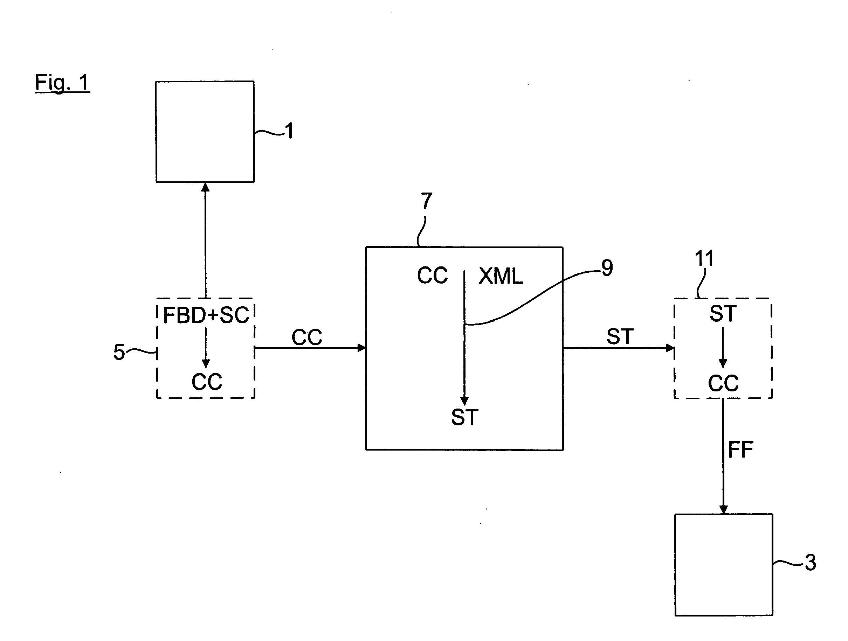

- Fig. 1: in einer Prinzipdarstellung das erfindungsgemäße Austauschverfahren für ein Steuergerät in einem Bordnetz eines Fahrzeuges.

In der Fig. 1 ist grobschematisch ein Austauschverfahren dargestellt, bei welchem ein defektes Steuergerät 1 gegen ein funktionsfähiges bzw. neues Steuergerät 3 ausgetauscht wird. Die Steuergeräte 1, 3 dienen als zentraler Bordnetzrechner für ein hier nicht dargestelltes Fahrzeug, insbesondere z. B. ein Kraft- oder Nutzfahrzeug. Aufgrund ihrer unterschiedlichen Produktionsgenerationen werden das auszutauschende Steuergerät 1 und das neue Steuergerät 3 durch nicht kompatible Betriebssoftware betrieben.

Im Rahmen des Austauschverfahrens werden zunächst Softwarekomponenten aus der Softwareentwicklungsumgebung 5 der Betriebssoftware des auszutauschenden Steuergeräts 1 mittels einer Datenverarbeitungsvorrichtung 7 exportiert. Die Softwarekomponenten umfassen Funktionsblockdiagramme FBD und Ablaufsteuerungen SC, auch als Schrittketten bezeichnet, welche in der Softwareentwicklungsumgebung 5 der Betriebssoftware des auszutauschenden Steuergeräts 1 in einen exportierbaren C-Code CC umgesetzt werden.

Nach dem Exportieren des C-Codes CC wird dieser mittels der Datenverarbeitungsvorrichtung 7 durch Kompilierung durch den Cross-Compiler 9 in einen strukturierten Text ST umgesetzt. Eine XML-Datei XML stellt dabei eine maschinenlesbare Referenz zwischen dem C-Code CC und dem strukturierten Text ST dar.

Ein Beschreibungsparser liest die XML-Datei XML ein und erstellt eine dynamische Struktur, die wiederum die notwendigen Informationen enthält, um den C-Code CC in strukturierten Text ST umzusetzen. Ein Basis-Parser analysiert die Struktur des C-Codes CC, während ein Lex-Parser für die tatsächlich Umsetzung des C-Codes CC in strukturierten Text ST zuständig ist.

Konfigurationen, die nicht über strukturierten Text ST abgedeckt werden können, können über einen weiteren Import (zum Beispiel XML-Import) in die Softwareentwicklungsumgebung 11 der Betriebssoftware des neuen Steuergeräts 3 importiert werden. Die Softwareimportierung in das neue Steuergerät 3 kann sowohl manuell als auch vollautomatisch erfolgen.

Der strukturierte Text ST wird in einer Softwareentwicklungsumgebung 11 der Betriebssoftware des neuen Steuergeräts 3 wiederum in einen C-Code CC umgesetzt, auf dessen Basis eine Flash-Datei FF erzeugt wird. Die Flash-Datei FF wird schließlich in das neue Steuergerät 3 importiert. Daraufhin wird das auszutauschende Steuergerät 1 gegen das neue Steuergerät 3 in einem hier nicht dargestellten Austauschschritt ausgetauscht.

## Patentansprüche

1. Austauschverfahren für ein Steuergerät (1), insbesondere für ein defektes und/oder veraltetes Steuergerät, in einem Bordnetz eines Fahrzeuges, bei welchem Austauschverfahren das auszutauschende Steuergerät (1) durch ein funktionsfähiges und/oder neues Steuergerät (3) ersetzt wird, wobei das auszutauschende Steuergerät (1) und das funktionsfähige und/oder neue Steuergerät (3) durch inkompatible Betriebssoftware betrieben werden, umfassend Folgendes:
- Exportieren zumindest einer Softwarekomponente (CC) aus einer Softwareentwicklungsumgebung (5) der Betriebssoftware des auszutauschenden Steuergeräts (1) mittels einer Datenverarbeitungsvorrichtung (7),
- Umsetzen der zumindest einen Softwarekomponente (CC) in einen in eine Softwareentwicklungsumgebung (11) der Betriebssoftware des funktionsfähigen und/oder neuen Steuergeräts (3) importierbaren Code (ST) mittels der Datenverarbeitungsvorrichtung (7),
- Importieren des Codes (CC) in die Softwareentwicklungsumgebung (11) der Betriebssoftware des funktionsfähigen und/oder neuen Steuergeräts (3) mittels der Datenverarbeitungsvorrichtung (7),
- Erzeugen der Betriebssoftware für das funktionsfähige und/oder neue Steuergerät (3) auf Basis des importierten Codes (CC) mittels der Datenverarbeitungsvorrichtung (7).

2. Austauschverfahren nach Anspruch 1, **dadurch gekennzeichnet, dass** das auszutauschende Steuergerät (1) ein zentrales Steuergerät, insbesondere ein Bordnetzrechner, eines Fahrzeuges, insbesondere eines Kraft- oder Nutzfahrzeuges, umfasst.

3. Austauschverfahren nach Anspruch 1 oder 2, **dadurch gekennzeichnet, dass** das auszutauschende Steuergerät (1) in einem Multiplexsystem, insbesondere einem Master-Slave-System, geschaltet ist.

4. Austauschverfahren nach Anspruch 3, **dadurch gekennzeichnet, dass** das auszutauschende Steuergerät (1) als Master geschaltet ist und zumindest einen Multiplexknoten ansteuert.

5. Austauschverfahren nach einem der vorhergehenden Ansprüche, **dadurch gekennzeichnet, dass** das auszutauschende Steuergerät (1) in einem CAN-Bus-System geschaltet ist.

6. Austauschverfahren nach einem der vorhergehenden Ansprüche, **dadurch gekennzeichnet, dass** die Betriebssoftware für das funktionsfähige und/oder neue Steuergerät (3) als Flash-Datei (FF) mittels der Datenverarbeitungsvorrichtung (7) erzeugt wird.

7. Austauschverfahren nach einem der vorhergehenden Ansprüche, **dadurch gekennzeichnet, dass** die zumindest eine Softwarekomponente (CC) aus der Softwareentwicklungsumgebung (5) der Betriebssoftware des auszutauschenden Steuergeräts (1) als C-Code mittels der Datenverarbeitungsvorrichtung (7) exportiert wird.

8. Austauschverfahren nach einem der vorhergehenden Ansprüche, **dadurch gekennzeichnet, dass** die zumindest eine Softwarekomponente (CC) aus der Softwareenfinricklungsumgebung (5) der Betriebssoftware des auszutauschenden Steuergerätes (1) zumindest ein Funktionsblockdiagramm (FBD) und/oder zumindest eine Ablaufsteuerung (SC) umfasst.

9. Austauschverfahren nach einem der vorhergehenden Ansprüche, **dadurch gekennzeichnet, dass** der importierbare Code (ST) durch Kompilierung mittels eines Cross-Compilers (9) der Datenverarbeitungsvorrichtung (7) erzeugt wird.

10. Austauschverfahren nach einem der Ansprüche 7 bis 9, **dadurch gekennzeichnet, dass** der importierbare Code (ST) durch Kompilierung des C-Codes (CC) in einen strukturierten Text (ST) erzeugt wird.

11. Austauschverfahren nach Anspruch 10, **dadurch gekennzeichnet, dass** die Kompilierung des C-Codes (CC) in den strukturierten Text (ST) auf Basis einer XML-Datei (XML) als maschinenlesbare Referenz erfolgt.
